# EUROPEAN PATENT APPLICATION

(11) **EP 4 169 888 A1**
(43) Date of publication of application: **26.04.2023**
(21) Application number: 21204051.3
(22) Date of filing: 21.10.2021
(51) Int. Cl.: C05C 9/00, C05G 5/30, C05C 3/00

(54) **FERTILIZER COMPOSITION INCLUDING AMMONIUM SULPHATE COATED UREA PARTICLES**

(71) Applicant: SABIC Global Technologies, B.V., 4612 PX Bergen op Zoom (NL)
(72) Inventor: BAG, Nilkamal, Bangalore (IN); ACHANATH, Radha, Bangalore (IN)
(74) Representative: Dehns

(57) **Abstract**

A fertilizer composition includes coated urea ammonium sulfate particles, the coated urea ammonium sulfate particles including: a urea core; and a coating on the urea core, wherein the coating includes ammonium sulfate. Methods for making coated urea ammonium sulfate particles include: (a) combining urea particles with sulfuric acid to form intermediate particles including an intermediate coating, wherein the intermediate coating includes urea sulfate; and (b) combining the intermediate particles with ammonia or an ammonium compound to form the coated urea ammonium sulfate particles, wherein the coated urea ammonium sulfate particles include a urea core and a coating including ammonium sulfate on the urea core.

## Description

### FIELD OF THE DISCLOSURE

The present disclosure relates to fertilizer compositions, and more particularly to fertilizer compositions including coated urea ammonium sulfate (UAS) particles.

### BACKGROUND OF THE DISCLOSURE

As a fertilizer, urea is a single nutrient source that supplies only nitrogen to the crop/plant. Enriching urea with other nutrients such as sulfur is challenging. Another challenge is to modify urea to supply both short-term and long-term nitrogen to the crop. Sulfur-enriched urea fertilizer is desirable to mitigate soil sulfur scarcity. Sulfur, along with nitrogen, are critical elements of proteins; accordingly, in fertilizers urea nitrogen and sulfur are an essential combination. Urea ammonium sulfate (UAS) is one fertilizer compound that can provide both nitrogen and sulfur.

Current methods for manufacturing urea ammonium sulfate include blending processes and chemical processes. Stamicarbon and Sandvik produce UAS from chemical processes.

In blending processes particles of urea and ammonium sulfate are mixed thoroughly using standard mixing devices. Such processes are inexpensive, easy to perform, and provide flexibility in mixing ratios. Drawbacks include: possible segregation of granules (particles) due to the density difference in the two granules; possible unequal distribution of nutrients during field application; low storage life; and possible adulteration.

In chemical processes (sometimes referred to as compounding or co-granulation processes) ammonium sulfate is added in solid/slurry solution form to a urea melt and then granulated. Chemical blending processes offer uniform distribution of nutrients, single granules including both nutrients (i.e., no segregation); uniform physical appearance; and flexibility in mixing ratios. Drawbacks include relatively higher capital cost and resulting higher final product cost and low critical relative humidity (CRH) values (about 55-60%), resulting in storage issues.

These and other shortcomings are addressed by aspects of the present disclosure.

### SUMMARY

Aspects of the disclosure relate to a fertilizer composition including coated urea ammonium sulfate particles, the coated urea ammonium sulfate particles including: a urea core; and a coating on the urea core, wherein the coating includes ammonium sulfate.

Further aspects of the disclosure relate to methods for making coated urea ammonium sulfate particles including: (a) combining urea particles with sulfuric acid to form intermediate particles including an intermediate coating, wherein the intermediate coating includes urea sulfate; and (b) combining the intermediate particles with ammonia or an ammonium compound to form the coated urea ammonium sulfate particles, wherein the coated urea ammonium sulfate particles include a urea core and a coating including ammonium sulfate on the urea core.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "an additive" includes mixtures of two or more additives.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound including 2 parts by weight of component X and 5 parts by weight component Y, X and Y are present at a weight ratio of 2:5, and are present in such ratio regardless of whether additional components are included in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Coated urea ammonium sulfate (UAS) particles

Urea is a popular and inexpensive source of nitrogen nutrient to crops/plants. Consumption of urea in agriculture is much higher than other sources of fertilizers. Accordingly, urea is a popular choice of vehicle to transfer other nutrients along with the urea. In the present disclosure urea ammonium sulfate (UAS) particles are formed by first coating urea with sulfuric acid to form the reactive coating urea sulfate, NH₂CONH₂ · H₂SO₄. The urea sulfate is then reacted with ammonia or an ammonium compound, resulting in urea ammonium sulfate as a final product. The final UAS product includes both nitrogen and sulfur nutrients. The UAS product also provides both short term (in the ammonium sulfate coating) and long-term nitrogen (in the urea) to the crop/plant. This nitrogen and sulfur particle can be used on areas where adequate levels of phosphorus and potassium are available in soil. Further, the UAS particles provide a safe alternative to ammonium nitrate. The fertilizer composition including the coated UAS particles is high in nitrogen and suitable for a variety of crops/plants, including but not limited to vegetables, corn, potatoes, onions, grass (lawns), gardens, flowers, shrubs and hedges. The coated UAS particles described herein can be made from a cost effective and simple process. In one method the coated UAS particles are formed in a simple granulation drum. The equipment used in the method are not susceptible to corrosion from sulfuric acid. Further, the final fertilizer product is acid-free. Moreover, the coated UAS particle (granule) has improved physical properties, and the ammonium sulfate coating helps to protect the urea particle core.

The reaction scheme for forming the coating on the UAS particle is shown below:

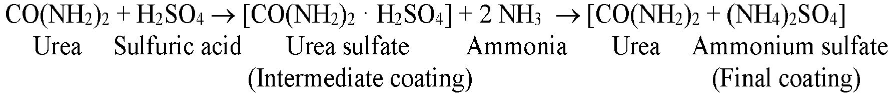

In some aspects, the disclosure relates to a fertilizer composition including coated urea ammonium sulfate particles, the coated urea ammonium sulfate particles including: a urea core; and a coating on the urea core. The coating includes ammonium sulfate.

The coating on the urea core may have a thickness of from about 0.5 millimeters (mm) to about 1.0 mm in particular aspects.

In certain aspects the coated urea ammonium sulfate particles include from about 25 wt% to about 75 wt% nitrogen. In further aspects the coated urea ammonium sulfate particles include from about 25 wt% to about 45 wt% nitrogen, or from about 25 wt% to about 40 wt% nitrogen, or from about 27 wt% to about 40 wt% nitrogen.

In specific aspects the coated urea ammonium sulfate particles include from about 2 wt% to about 25 wt% sulfur, or in particular aspects from about 5 wt% to about 20 wt% sulfur, or from about 6 wt% to about 19 wt% sulfur.

The coated urea ammonium sulfate particles in some aspects have a ratio of urea to ammonium sulfate of from about 3:1 to about 1:3.

In yet further aspects the coated urea ammonium sulfate particles have a ratio of nitrogen to sulfur of from about 6:1 to 8:1. This ratio may be particularly suited for crops such as corn and canola. In other aspects the coated urea ammonium sulfate particles have a ratio of nitrogen to sulfur of about 15:1, which may be particularly suited for crops such as soybeans. In further aspects the coated urea ammonium sulfate particles have a ratio of nitrogen to sulfur of about 10:1 to about 7:1, which may be desirable for crops such as wheat. In specific aspects the coated urea ammonium sulfate particles have a ratio of nitrogen to sulfur of about 10:1, which may be suitable for crops such as sunflower.

The fertilizer composition may further include one or more additives. Exemplary additives may include, but are not limited to, an additional fertilizer, a micronutrient, a secondary nutrient, or an organic additive. In some instances, the fertilizer composition can include one or more of iron, manganese, zinc, and copper. In some instances, the fertilizer composition includes MgO. In some instances, the fertilizer composition can include 0.1 wt.% to 5 wt.%, 1.5 wt.% to 4 wt.%, or 2 wt.% to 4 wt.% MgO. The fertilizer composition can include a phosphate-based fertilizer, an additional urea-based fertilizer, and/or a potassium-based fertilizer. In some instances, the fertilizer composition does not include phosphorus, potassium, or both. The additive can be a fertilizer, a micronutrient, a secondary nutrient, or an organic additive. The additive can be a fertilizer, compound, or composition that provides a nitrogen based fertilizer, a phosphate-based fertilizer, a potassium-based fertilizer, a urea-based fertilizer, a fertilizer providing nitrogen-phosphorus-potassium (NPK), diammonium phosphate (DAP), monoammonium phosphate (MAP), single superphosphate (SSP), triple superphosphate (TSP), urea, potassium chloride, potassium sulfate, magnesium sulfate, superphosphates, phosphate rocks, potash, sulfate of potash (SOP), muriate of potash (MOP), kieserite, carnallite, magnesite, dolomite, boric acid, boron (B), copper (Cu), iron (Fe), manganese (Mn), molybdenum (Mo), zinc (Zn), selenium (Se), silicon (Si), free Ca, magnesium (Mg), elemental sulfur (S), neem oil, seaweed extract, bio-stimulants, char, ashes from incineration of animal waste or animal tissues, or any combination thereof.

The one or more additives, if included, may be applied to the coated urea ammonium sulfate particles as an additional coating. In other aspects the one or more additives may be mixed with the coated UAS particles described herein.

### Methods for making coated urea ammonium sulfate (UAS) particles

Aspects of the disclosure further relate to methods for making coated urea ammonium sulfate (UAS) particles. In the general method, urea particles are first coated with concentrated sulfuric acid to form an intermediate coating of urea sulfate on the urea particles. The urea sulfate intermediate coating is then neutralized with ammonia or an ammonium compound to form the coated UAS particle including urea and an ammonium sulfate coating.

The nitrogen to sulfur (N:S) ratio may be modified such that the coated UAS particle has a total nitrogen content of at least 40 wt%. The particle includes both short-term and long-term nitrogen. More specifically, in some aspects the coated UAS particle may be prepared in a batch process using a mixing drum coating system. In a small scale production a suitable mixing drum is a Minimix 150 professional mixer, available from Belle Group. The mixer has a capacity of from about 2 kilograms (kg) to 40 kg. The drum includes four baffles having a 0.5 inch height and 1 inch width across the drum length, which allows the urea particles to be frequently mixed/dumped. The drum coater system includes an electric motor to rotate the drum. The components are added to the rotating drum in manual mode starting from feeding and discharge the coated material.

In one aspect, the desired amount of granular urea product is weighed and fed into the drum. Sulfuric acid is then added to the drum at the desired dosing. Drum rotation is continued for several minutes to ensure a uniform coating of sulfuric acid over the urea particles and to form the intermediate urea sulfate coating. Finally, ammonia is added and the drum rotated as long as necessary (e.g., 15 minutes) to replace the intermediate urea sulfate coating with the ammonium sulfate coating to form the coated UAS particle. Rotation of the drum can be stopped and the final coated UAS particles collected from the drum for further processing (e.g., packaging, transportation, use, etc.).

Aspects of the disclosure further relate to methods for making coated urea ammonium sulfate particles, including: (a) combining urea particles with sulfuric acid to form intermediate particles including an intermediate coating, wherein the intermediate coating includes urea sulfate; and (b) combining the intermediate particles with ammonia or an ammonium compound to form the coated urea ammonium sulfate particles. The coated urea ammonium sulfate particles include a urea core and a coating including ammonium sulfate on the urea core.

In some aspects step (b) of forming the coated urea ammonium sulfate particles includes combining the intermediate particles with ammonia gas.

Steps (a) and (b) of the method may be performed in a rotating drum in some aspects. In certain aspects the coated urea ammonium sulfate particles may be formed at ambient temperature, with no external heat applied to the reaction products. It may be noted, however, that the reaction between the sulfuric acid and ammonia (or ammonium compound) is an exothermic process, so it may be anticipated that the temperature of the components will increase during the method. The method may be completed in as little as 5-10 minutes in certain aspects. The rotating drum may rotate at any suitable speed, such as but not limited to 4-7 revolutions per minute (RPM).

The coated UAS particles formed according to the disclosed methods may have nitrogen and sulfur contents (and ratios thereof) according to those described herein.

The present disclosure also relates to fertilizer compositions including urea ammonium sulfate particles formed according to the methods described herein. The fertilizer compositions may include one or more additives including but not limited to those additives described herein.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A fertilizer composition comprising coated urea ammonium sulfate particles, the coated urea ammonium sulfate particles comprising:
   a urea core; and
   a coating on the urea core, wherein the coating comprises ammonium sulfate.
Aspect 2. The fertilizer composition according to Aspect 1, wherein the coated urea ammonium sulfate particles comprise from about 25 wt% to about 75 wt% nitrogen.
Aspect 3. The fertilizer composition according to Aspect 1 or 2, wherein the coated urea ammonium sulfate particles comprise from about 2 wt% to about 25 wt% sulfur.
Aspect 4. The fertilizer composition according to any of Aspects 1 to 3, wherein the coated urea ammonium sulfate particles have a ratio of urea to ammonium sulfate of from about 3:1 to about 1:3.
Aspect 5. The fertilizer composition according to any of Aspects 1 to 4, wherein the coated urea ammonium sulfate particles have a ratio of nitrogen to sulfur of from about 6:1 to 8:1.
Aspect 6. The fertilizer composition according to any of Aspects 1 to 4, wherein the coated urea ammonium sulfate particles have a ratio of nitrogen to sulfur of about 15:1.
Aspect 7. The fertilizer composition according to any of Aspects 1 to 4, wherein the coated urea ammonium sulfate particles have a ratio of nitrogen to sulfur of about 10:1 to about 7:1.
Aspect 8. The fertilizer composition according to any of Aspects 1 to 4, wherein the coated urea ammonium sulfate particles have a ratio of nitrogen to sulfur of about 10:1.
Aspect 9. The fertilizer composition according to any of Aspects 1 to 5, wherein the fertilizer composition further comprises one or more additives.
Aspect 10. The fertilizer composition according to Aspect 9, wherein the one or more additives comprises an additional fertilizer, a micronutrient, a secondary nutrient, or an organic additive.
Aspect 11. The fertilizer composition according to Aspect 10 or 11, wherein the one or more additives is applied to the coated urea ammonium sulfate particles as an additional coating.
Aspect 12 The fertilizer composition according to any of Aspects 1 to 11, wherein the coating on the urea core has a thickness of from about 0.5 millimeters (mm) to about 1.0 mm.
Aspect 13. A method for making coated urea ammonium sulfate particles, comprising:
   (a) combining urea particles with sulfuric acid to form intermediate particles comprising an intermediate coating, wherein the intermediate coating comprises urea sulfate; and
   (b) combining the intermediate particles with ammonia or an ammonium compound to form the coated urea ammonium sulfate particles, wherein the coated urea ammonium sulfate particles comprise a urea core and a coating comprising ammonium sulfate on the urea core.
Aspect 14. The method according to Aspect 13, wherein step (b) of forming the coated urea ammonium sulfate particles comprises combining the intermediate particles with ammonia gas.
Aspect 15. The method according to Aspect 13 or 14, wherein steps (a) and (b) are performed in a rotating drum.
Aspect 16. The method according to any of Aspects 13 to 15, wherein the coated urea ammonium sulfate particles comprise from about 25 wt% to about 75 wt% nitrogen.
Aspect 17. The method according to any of Aspects 13 to 16, wherein the coated urea ammonium sulfate particles comprise from about 2 wt% to about 25 wt% sulfur.
Aspect 18. The method according to any of Aspects 13 to 17, wherein the coated urea ammonium sulfate particles have a ratio of urea to ammonium sulfate of from about 3:1 to about 1:3.
Aspect The method according to any of Aspects 13 to 18, wherein the coated urea ammonium sulfate particles have a ratio of nitrogen to sulfur of from about 6:1 to 8:1.
Aspect 20. The method according to any of Aspects 13 to 18, wherein the coated urea ammonium sulfate particles have a ratio of nitrogen to sulfur of about 15:1.
Aspect 21. The method according to any of Aspects 13 to 18, wherein the coated urea ammonium sulfate particles have a ratio of nitrogen to sulfur of about 10:1 to about 7:1.
Aspect 22. The method according to any of Aspects 13 to 18, wherein the coated urea ammonium sulfate particles have a ratio of nitrogen to sulfur of about 10:1.
Aspect 23. The method according to any of Aspects 13 to 22, wherein the coating comprising ammonium sulfate has a thickness of from about 0.5 millimeters (mm) to about 1.0 mm.
Aspect 24. A fertilizer composition comprising urea ammonium sulfate particles formed according to the method of any of Aspects 13 to 23.
Aspect 25. The fertilizer composition according to Aspect 24, wherein the fertilizer composition further comprises one or more additives.
Aspect 26. The fertilizer composition according to Aspect 24 or 25, wherein the one or more additives comprises an additional fertilizer, a micronutrient, a secondary nutrient, or an organic additive.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Example 1 - Lab Scale

As a small-scale experiment, 87 grams (g) of urea was added to a one-liter plastic bottle having a cap. 6.6 g of sulfuric acid was added to the bottle, which was capped and shaken vigorously for 2 minutes. Then 6.4 g of ammonium carbonate powder was added to the bottle; the bottle was shaken vigorously for 10 min. coated urea ammonium sulfate particles resulted. Ammonium carbonate was used instead of ammonia gas, as the gas form of ammonia is more difficult to use in a laboratory setting. In a manufacturing plant ammonia gas can be more easily used.

The coated UAS particles formed according to this example included 40 wt% nitrogen from urea, 2 wt% nitrogen from ammonia (ammoniacal nitrogen), and 2 wt% sulfur.

### Example 2 - Further Coated UAS Particles (prophetic)

Additional coated UAS particle formulations may be prepared according to Table 1:

**Table 1 - Prophetic Formulations**

| **Raw materials (amounts in g)** | | | **Final coated product (wt%)** | | | |
|---|---|---|---|---|---|---|
| **Urea** | **Sulfuric acid** | **NH₃** | **%N from Urea** | **%N from ammonia** | **Total %N** | **%S** |
| 50 | 37.0 | 13.0 | 23.0 | 10.7 | 33.7 | 11.8 |
| 55 | 33.3 | 11.7 | 25.3 | 9.6 | 34.9 | 10.7 |
| 60 | 29.6 | 10.4 | 27.6 | 8.5 | 36.1 | 9.5 |
| 65 | 25.9 | 9.1 | 29.9 | 7.5 | 37.4 | 8.3 |
| 70 | 22.2 | 7.8 | 32.2 | 6.4 | 38.6 | 7.1 |
| 75 | 18.5 | 6.5 | 34.5 | 5.3 | 39.8 | 5.9 |
| 78 | 14.8 | 5.2 | 35.9 | 4.3 | 40.1 | 4.7 |

These formulations have a maximum total nitrogen content of about 40 wt% We have fixed total nitrogen of from about 33 wt% to 40% wt%. Coated UAS particles having other N:S ratios could be prepared as desired.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A fertilizer composition comprising coated urea ammonium sulfate particles, the coated urea ammonium sulfate particles comprising:
a urea core; and
a coating on the urea core, wherein the coating comprises ammonium sulfate.

2. The fertilizer composition according to claim 1, wherein the coated urea ammonium sulfate particles comprise from about 25 wt% to about 75 wt% nitrogen.

3. The fertilizer composition according to claim 1 or 2, wherein the coated urea ammonium sulfate particles comprise from about 2 wt% to about 25 wt% sulfur.

4. The fertilizer composition according to any of claims 1 to 3, wherein the coated urea ammonium sulfate particles have a ratio of nitrogen to sulfur of from about 6:1 to 8:1, or a ratio of nitrogen to sulfur of about 15:1, or a ratio of nitrogen to sulfur of about 10:1 to about 7:1, or a ratio of nitrogen to sulfur of about 10:1.

5. The fertilizer composition according to any of claims 1 to 4, wherein the fertilizer composition further comprises one or more additives.

6. The fertilizer composition according to claim 5, wherein the one or more additives comprises an additional fertilizer, a micronutrient, a secondary nutrient, or an organic additive.

7. The fertilizer composition according to claim 5 or 6, wherein the one or more additives is applied to the coated urea ammonium sulfate particles as an additional coating.

8. The fertilizer composition according to any of claims 1 to 7, wherein the coating on the urea core has a thickness of from about 0.5 millimeters (mm) to about 1.0 mm.

9. A method for making coated urea ammonium sulfate particles, comprising:
(a) combining urea particles with sulfuric acid to form intermediate particles comprising an intermediate coating, wherein the intermediate coating comprises urea sulfate; and
(b) combining the intermediate particles with ammonia or an ammonium compound to form the coated urea ammonium sulfate particles, wherein the coated urea ammonium sulfate particles comprise a urea core and a coating comprising ammonium sulfate on the urea core.

10. The method according to claim 9, wherein step (b) of forming the coated urea ammonium sulfate particles comprises combining the intermediate particles with ammonia gas.

11. The method according to claim 9 or 10, wherein steps (a) and (b) are performed in a rotating drum.

12. The method according to any of claims 9 to 11, wherein the coated urea ammonium sulfate particles comprise from about 25 wt% to about 75 wt% nitrogen and from about 2 wt% to about 25 wt% sulfur.

13. The method according to any of claims 9 to 12, wherein the coated urea ammonium sulfate particles have a ratio of nitrogen to sulfur of from about 6:1 to 8:1, or a ratio of nitrogen to sulfur of about 15:1, or a ratio of nitrogen to sulfur of about 10:1 to about 7:1, or a ratio of nitrogen to sulfur of about 10:1.

14. A fertilizer composition comprising urea ammonium sulfate particles formed according to the method of any of claims 9 to 13.

15. The fertilizer composition according to any of claims 9 to 14, wherein the fertilizer composition further comprises one or more additives comprising an additional fertilizer, a micronutrient, a secondary nutrient, or an organic additive.
